(19) Europäisches Patentamt
European Patent Office
Office européen des brevets

(11) **EP 4 163 620 A1**

(12) **EUROPEAN PATENT APPLICATION**

(43) Date of publication:
**12.04.2023 Bulletin 2023/15**

(21) Application number: **21201107.6**

(22) Date of filing: **06.10.2021**

(51) International Patent Classification (IPC):
**G01N 21/31** (2006.01)    **A01D 33/08** (2006.01)
**A01D 41/127** (2006.01)    **C13B 5/06** (2011.01)
**G01N 21/85** (2006.01)    **G01N 21/84** (2006.01)
**G01N 21/94** (2006.01)    **G01N 21/359** (2014.01)
**G01N 21/65** (2006.01)    **G01N 21/71** (2006.01)

(52) Cooperative Patent Classification (CPC):
**G01N 21/31; A01D 33/08; A01D 41/1277;**
G01N 21/359; G01N 21/65; G01N 21/718;
G01N 21/85; G01N 2021/845; G01N 2021/8466;
G01N 2021/945; G01N 2201/129

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KWS SAAT SE & Co. KGaA**
**37574 Einbeck (DE)**

(72) Inventors:
• **Hilscher, Elke**
  **37574 Einbeck (DE)**
• **Narten, Heiko**
  **37574 Einbeck (DE)**
• **Meldau, Stefan**
  **37574 Einbeck (DE)**

(74) Representative: **Eisenführ Speiser**
**Patentanwälte Rechtsanwälte PartGmbB**
**Johannes-Brahms-Platz 1**
**20355 Hamburg (DE)**

(54) **METHOD FOR ANALYZING A CROP SAMPLE COMPRISING A TARGET PLANT MATERIAL WITH SOIL TARE ADHERED THERETO**

(57)    The disclosure relates to a method (100) for analyzing a crop sample comprising a target plant material (305) with soil tare adhered thereto, in particular soiled plant material, comprising receiving (110) the crop sample comprising target plant material adhered with soil tare comprising target plant material and soil tare, emitting (120) electromagnetic waves towards the crop sample comprising target plant material adhered with soil tare, receiving (130) electromagnetic waves reflected from the crop sample comprising target plant material adhered with soil tare, processing (140) the received electromagnetic waves using an analysis assembly, determining a percentage by mass (150a) of the target plant material (305) and/or a percentage by mass of the soil tare (150b) and/or components of the soil tare (150c). Further, the disclosure relates to a method (600) for generating first calibration data for analyzing a crop sample comprising a target plant material (305) with soil tare adhered thereto, and an analysis assembly for analyzing a crop sample comprising a target plant material (305) with soil tare adhered thereto. In addition, the disclosure relates to an arrangement for analyzing a crop sample comprising a target plant material (305) with soil tare adhered thereto, a sugar production facility, and the use of an analysis assembly in a sugar production facility.

Fig. 3

EP 4 163 620 A1

**Description**

The invention relates to a method for analyzing a crop sample comprising a target plant material with soil tare adhered thereto , a method for generating first calibration data for analyzing a crop sample comprising a target plant material with soil tare adhered thereto, and an analysis assembly for analyzing a crop sample comprising a target plant material with soil tare adhered thereto. Further, the invention relates to an arrangement for analyzing a crop sample comprising a target plant material with soil tare adhered thereto, a sugar production facility, and the use of an analysis assembly in a sugar production facility.

In the food industry, typically plant material, such as root crops, in particular sugar beets, are delivered to a production facility, for example a sugar production facility. Sugar beets are typically used for sugar production in sugar production facilities. Sugar beets are removed from the ground and are either delivered directly to the sugar production facility or stored at the field for later delivery to the sugar production facility. When sugar beets are delivered to a sugar production facility, the so-called tare content, which is the amount of soil tare (which is also denominated soil tare or tare soil) comprising for example soil that adheres to the sugar beets, solid lumps, leaf debris, weeds, loose soil, stones, and any other material that was picked up with the sugar beets, is determined. Sugar beets are delivered with trucks to receiving stations, where the trucks with the sugar beets are weighed. The sugar beets are transferred to a set of grab rolls. The grab rolls grate and pinch off a substantial portion of tops, weeds, and dirt, which is attached to the sugar beets after harvesting. The soil tare is often referred to as tare soil or soil tare (as described for example in Vermeulen,G.D: "Reduction of soil tare by improving uprooting of sugar beet, a soil dynamic approach"; Dissertation Wageningen University 2001) and can be expressed in percent of the total mass of sugar beets and soil tare (i.e. gross soil tare) or in percent of the mass of cleaned sugar beets (i.e. net soil tare). The relative mass of the tare soil is usually referred to as soil tare, expressed in percent of the total mass of sugar beets and soil tare (gross soil tare) or of the mass of the clean sugar beets (net soil tare). Determining the tons of sugar beets that are received at a receiving station, the truck can be weighed fully loaded upon arrival and then weighed again empty after offloading the delivery.

The terms unwanted material, tare soil and soil tare are used synonymously herein.

To determine the amount of soil tare, the delivered sugar beets or a part of the delivered sugar beets, for example in the range of 20 wt.% - 25 wt.% of the delivered sugar beets, are weighted and sampled. First, the sample is weighed, and then the sugar beets are washed and cleaned. Thereby, it is typically necessary that material has to be removed by hand. Then, the cleaned sample is weighed and the percentage by mass of the soil tare (%tare) is calculated by determining the mass of the uncleaned sample (W1) minus the mass of the cleaned sample (W2) and dividing this difference by the mass of the uncleaned sample (W1). The result therefrom expressed in percent is often referred to as "tare percentage", which is the percentage of mass of the soil tare with respect to the mass of the whole delivery comprising plant material and soil tare. The equation of the above described calculation can be expressed as follows:

$$\%tare = (\ [W1 - W2]\ /\ W1\ )\ x\ 100$$

In "Beet-Sugar Handbook", Mosen Asadi, John Wiley & Sons, 23.06.2006 - 800 pages, p. 94-96 it is described that a beet gross weight (weight of sugar beets and tare) equals the weight of the loaded vehicle (weight in) minus the weight of the unloaded vehicle (weight out).

$$Weight\ gross = Weight\ in - Weight\ out$$

And all tare for a particular grower for each day can be averaged and applied to the sugar beet gross weight to calculate sugar beet net weight

$$Net\ weight = (Gross\ weight)\ x\ (100\text{-}\%tare)\ /\ 100$$

With the tare percentage the net mass of delivered sugar beets can be determined. Based on the net mass, the deliverer can be paid. Typically, the payment for the delivery is calculated by taking into account the determined percentage by mass of the soil tare and preferably other parameters such as sugar content of the sugar beets.

Existing solutions, however, have the drawback that determining the percentage by mass of the soil tare requires a considerable amount of equipment for weighing and/or sampling and/or preparing, in particular cleaning, manually removing unwanted material and drying, the delivered plant material. In addition, large amounts of water are needed in these processes, for example 600-1000 gallons of water per minute per washer can be needed, and many laboratories operate multiple lines with each line having a washer. Thus, a challenge for most laboratories is that they first must source a large amount of water which needs to be a relatively clean and which needs to be provided from a stable source. Furthermore, it must be possible to dispose the water which typically contains dirt and other contaminants, hence it is typically required that the water is treated. In addition, determining the percentage by mass is relatively time-consuming and labour-intensive. Hence, the determination of the percentage of mass of the soil tare is relatively expensive.

It is an object of the present invention to provide an improved method for analyzing a crop sample comprising a target plant material with soil tare adhered thereto, and/or to provide an improved method for generating calibration data for analyzing a crop sample comprising a target plant material with soil tare adhered thereto, and/or to provide an improved analysis assembly and/or an improved arrangement for analyzing a crop sample comprising a target plant material with soil tare adhered thereto. In particular, it is an object of the present invention to provide a solution for reliably determining the amount of soil tare and/or to reliably determine components of the soil tare.

According to a first aspect, it is provided a method for analyzing a crop sample comprising a target plant material with soil tare adhered thereto, comprising receiving a crop sample comprising target plant material adhered with soil tare, emitting electromagnetic waves towards the crop sample comprising target plant material adhered with soil tare, receiving electromagnetic waves reflected from the crop sample comprising target plant material adhered with soil tare, processing the received electromagnetic waves using an analysis assembly, determining a percentage by mass of the target plant material and/or a percentage by mass of the soil tare and/or components of the soil tare.

Preferably, the method steps are carried out in the listed order, in particular one after the other. However, it is also possible to carry out the method in an order that deviates from the listed order.

Herein, a crop sample comprising a target plant material with soil tare adhered thereto ist used synonymously with a crop sample comprising target plant material adhered with soil tare. This is preferably understood as target plant material together with soil tare. Preferably, a crop sample comprising a target plant material with soil tare adhered thereto or comprising target plant material adhered with soil tare can be understood to be directly harvested plant material, in particular in the state in which it is delivered to the sugar production facility. In particular, a crop sample comprising a target plant material with soil tare adhered thereto or comprising target plant material adhered with soil tare can be understood as harvested plant material that is not completely cleaned. A crop sample comprising a target plant material with soil tare adhered thereto or comprising target plant material adhered with soil tare comprises target plant material and soil tare. Tare soil as used herein in particular refers to the presence of soil tare.

Soil tare is preferably understood to be material that is not wanted in the production process, for example in the sugar production process. soil tare or unwanted material preferably comprises one or several of the following group: soil that adheres to the target plant material, solid lumps, leaf debris, weeds, loose soil, stones, and any other material that was picked up with the target plant material, is determined.

Target plant material can be root crops and/or tuber crops, in particular of the species Beta vulgaris and/or Solanum tuberosum. Target plant material is preferably understood to be the part or the parts of a plant material that is wanted for processing, for example for extraction of sugar, in a production process, in particular in a sugar production process the sugar beet plant without its leaves can be the target plant material. Plant material can for example be root crops and/or tuber crops, in particular of the species Beta vulgaris and/or Solanum tuberosum. Preferably, plant material comprises or is one or several of the following group: sugar beet, spinach beet, swiss chard, beetroot, mangelwurzel, potato. Herein, target material is understood to be target plant material.

Preferably, receiving a crop sample comprising target plant material adhered with soil tare is conducted by receiving a truckload of crop samples comprising target plant material adhered with soil tare and/or a container of crop samples comprising target plant material adhered with soil tare and/or a goods wagon of crop samples comprising target plant material adhered with soil tare. Preferably the spectroscopic analysis of the soil tare takes place in a receiving section of a sugar production facility.

Preferably, the electromagnetic waves that are emitted towards the crop sample comprising target plant material adhered with soil tare lie within the infrared spectrum, in particular in the near-infrared spectrum and/or in the visible spectrum and/or in the ultraviolet spectrum. Preferably, the electromagnetic waves have at least one wavelength, wherein the wavelength of the electromagnetic waves lies in the range of 170 nm to 1,000,000 nm, in particular in the range of 750 nm to 2,500 nm, preferably in the range of 780 nm to 1800 nm. Preferably, the spectral signal is converted by using spectroscopy, in particular near-infrared spectroscopy (NIRS), and/or mid-infrared spectroscopy, and/or far-infrared-spectroscopy, and/or terahertz-spectroscopy and/or ultraviolet-visible spectroscopy (UV-Vis) and/or Raman spectroscopy and/or laser-induced breakdown spectroscopy (LIBS) and/or images as well as hyperspectral images and/or combination of images and/or hyperspectral images with spectroscopy methods and/or combinations of different spectroscopic methods.

Preferably, the received electromagnetic waves are converted into a spectral signal, wherein the spectral signal is generated dependent on the received electromagnetic waves.

Preferably, the electromagnetic waves are reflected from the crop sample comprising target plant material adhered with soil tare and the reflected electromagnetic waves are received, in particular with a sensor that is adapted to receive electromagnetic waves. Preferably, the electromagnetic waves are reflected from the crop sample comprising target plant material adhered with soil tare, or a part thereof. The electromagnetic waves can also be, at least partly, emitted through the plant material and the electromagnetic waves can be received, in particular with a sensor that is adapted to receive electromagnetic waves. Preferably, the electromagnetic waves can be emitted through the plant material, orthrough a part thereof.

The analysis assembly is preferably adapted to process the spectral signal. Preferably, processing the received electromagnetic waves comprises the received electromagnetic waves are being converted into a spectral signal, wherein the spectral signal is generated dependent on the received electromagnetic waves.

Preferably, the method comprises processing the spectral signal for determining a percentage by mass of the target plant material and/or for determining a percentage by mass of the soil tare.

The percentage by mass of the soil tare can preferably be predicted from the spectral signal, in particular from information in the spectral signal, in particular by taking into account calibration data.

Characteristics of the crop sample comprising target plant material adhered with soil tare can in particular be understood as any properties of the crop sample comprising target plant material adhered with soil tare. In particular, characteristics of the crop sample comprising target plant material adhered with soil tare can be understood to comprise the percentage by mass of the target plant material and/or the percentage by mass of the soil tare and/or components of the soil tare.

A first advantage is that the prediction of the percentage by mass of the soil tare can be relatively accurate so that the percentage by mass can be determined by using spectroscopy and preferably RGB images. The process for determining the percentage by mass can thus be automated, wherein less labour is needed for the determination of the percentage by mass.

In addition, in known processes for determining the percentage by mass of the soil tare laboratory and weighing equipment is necessary. It is an advantage of the method described herein that less equipment and less space is needed when compared to conventional methods for determining the percentage by mass of the soil tare.

Another advantage is that less water is needed for determining the percentage by mass of the soil tare when compared to conventional methods for determining the percentage by mass of the soil tare.

Another advantage is that with the method more reliable results can be obtained because human failure can be minimized due to less manual steps in the method described herein when compared to conventional methods.

Furthermore, it is an advantage that the method can be implemented in a sugar production process, in particular in a sugar production facility, without the need to stop the sugar production process. In particular, with the method it is possible to conduct the spectroscopic measurements and/or to take images on the crop sample comprising target plant material adhered with soil tare that is moved on a conveyor belt. Thus, the method can be carried out as a continuous process. Therefore, the method can save time and be more cost efficient when compared to conventional methods.

Another advantage is that not only samples can be investigated with this method, as this can be the case for conventional methods. But it is possible to continuously carrying out the method and therefore analysing at least partly all parts of the delivered crop sample comprising target plant material adhered with soil tare which can result in more representative sampling. Thus, with the described method a more reliable and a more accurate determination of the percentage by mass of the soil tare can be achieved.

Preferably, the electromagnetic waves are reflected from the crop sample comprising target plant material adhered with soil tare that is arranged on a transport device, such as a conveyor belt, and the reflected electromagnetic waves are received, in particular with a sensor that is adapted to receive electromagnetic waves. Preferably, the electromagnetic waves are reflected continuously from the crop sample comprising target plant material adhered with soil tare.

Another advantage is that with the method it is possible to analyse the soil tare. The method can comprise processing the spectral signal for determining components of the soil tare. By determining components of the soil tare, valuable information regarding the soil tare can be obtained.

For example, it is possible to obtain information about macro and trace nutrients of the soil as part of the soil tare. Although a large number of elements are naturally available in the soil, 17 elements are currently known to be important for the proper growth and development of crop plants. While Nitrogen (N), Phosphorus (P), Potash (K), Calcium, Sulfur (S), and Magnesium are known as macro-nutrients (required in comparatively larger amounts), Iron (Fe), Zinc (Zn), Copper, Boron, Manganese Molybdenum, Chloride, and others are the micro-nutrients (required in a smaller quantity) for the growth and development of crop plants. This information can be used to determine the soil quality in which the crop sample comprising target plant material adhered with soil tare was harvested. Based on these information further farming decisions regarding the field from which the plant material was harvested can be made. Soils can have inhomogeneous distribution of chemical, physical and biological soil properties. Therefore information on components in the soil can be particularly valuable.

According to a preferred embodiment, processing electromagnetic waves is conducted by using spectroscopy, in particular near-infrared spectroscopy, and preferably digital image analysis, in particular of RGB images, and/or hyperspectral imaging, for determining a percentage by mass of the target plant material and/or a percentage by mass of the soil tare.

In a preferred embodiment, near-infrared spectroscopy is used for determining a percentage by mass of the target plant material and/or a percentage by mass of the soil tare. In particular it is possible that by only using near-infrared spectroscopy the percentage by mass of the soil tare and/or the percentage by mass of the target material can be determined. However, it can be preferred that in addition further analysis methods are used.

Preferably, images, in particular RGB images, of the crop sample comprising target plant material adhered with soil tare are captured next to or behind a sensor head of a spectroscopy device, which is preferably a near-infrared spectroscopy device. Thus, the crop sample comprising target plant material adhered with soil tare can be analysed by using RGB images. Taking RGB images and carrying out analysis by using near-infrared spectroscopy can be carried out simultaneously.

Preferably, the crop sample comprising target plant material adhered with soil tare is illuminated with light to remove at least a part of, in particular the greatest amount of, shadows and a camera captures at least one image, preferably several images, of the crop sample comprising target plant material adhered with soil tare. The captured images can be filtered to provide the possibility to distinguish the target plant material from the soil tare. A filter can be set up to be trained to distinguish what is either target material or soil tare. Such a filter can also be set up to determine specific parts in the soil tare, such as for example sugar beet tops. Thus, it is also possible to determine the relative amount of specific parts in the soil tare.

Preferably, the percentage by mass of the soil tare and the percentage by mass of the target material add up to 100 %. If the percentage by mass of the soil tare is known, the percentage by mass of the target material can be calculated and vice versa.

The net mass of the target material can be calculated from the percentage by mass of the target material and the mass of the crop sample comprising target plant material adhered with soil tare. It is also possible that the net mass of the target material can be calculated from the percentage by mass of the soil tare and the mass of the crop sample comprising target plant material adhered with soil tare.

Preferably, processing electromagnetic waves is conducted by using spectroscopy, in particular laser-induced breakdown spectroscopy (LIBS), and preferably at least one other analytical method, for determining components of the soil tare.

Preferably other analytical methods are at least one of the following group: spectroscopy, in particular near-infrared spectroscopy, digital image analysis, in particular of RGB images, hyperspectral imaging.

Herein, determining components of the soil tare can in particular be understood as determining parameters of the soil tare, in particular chemical soil parameters.

Such chemical soil parameters preferably include the total contents of the main nutrients, such as for example potassium, magnesium, calcium, nitrogen and phosphorus, and/or the total contents of the trace nutrients such as for example iron and manganese, and/or the plant availability of these nutrients, and/or the humus content and/or the soil pH value.

Laser-induced breakdown spectroscopy (LIBS) can be understood as an optical emission spectroscopy technique, wherein preferably an intense pulse of laser radiation, typically of nanosecond duration, is focused onto the sample, where it ablates material from the surface and creates a micro-plasma. The plasma, in turn, excites atoms and atomic ions that emit radiation specific to the elemental composition of the sample. By use of certified reference material, the detected spectrum can be related to total concentrations of elements. The technique can thus be used for simultaneous multi-element analysis. In comparison to X-ray fluorescence (XRF), which also gains interest as method for rapid soil analysis, the whole range of elements, including the light elements, is accessible by LIBS. This allows the direct (in situ) analysis of macro and trace nutrients because no or only minimal sample preparation is necessary.

For example in a sugar production facility, a LIBS system can be set up on a conveyor belt behind a chopper that chops the delivered sugar beets into sugar beet pieces, so that the chopped sugar beet are analysed using LIBS. The spectral data processing can be done as described in the following example: First, all spectra of a plot are filtered to eliminate spectra without information content. The filter wavelength was set to the Hα line at 656.6 nm. All spectra below a threshold of 1500 counts were removed. The remaining spectra of each plot were averaged to become the mean plot spectrum. In a second step, plots where the mean plot spectrum contained less than 110 individual spectra were removed, to avoid non-representative plots in the data set. In a third step, the plot mean spectra are background corrected and normalized (to background, Hα, N/O line, depending on the analyte). In a fourth step, the wavelength range is selected according to the analyte. In a fifth step, outlier inspection and removal is conducted. And in a sixth step, the data is split into calibration and validation.

As specific parameters for the fiber LIBS system, for example the following values can be used:

| Parameter | Value |
|-----------|-------|
| Grating | 600 lines / mm |

(continued)

| Parameter | Value |
|---|---|
| Slit | 25 $\mu$m |
| Wavelength range | 485.0 - 1020.5 nm |
| Dispersion / Pixel | 0.26 nm |
| Spectral resolution | Approx. 0.7 nm |
| Pixel | 2048 |
| Pixel distance | 14 $\mu$m |
| Pixel height | 200 $\mu$m |
| Pixel width | 14 $\mu$m |

As specific parameters for the laser of the LIBS system, for example the following values can be used:

| Laser | Microchip Laser | High Power Laser |
|---|---|---|
| Pulse energy | 3 mJ | 14 mJ |
| Pulse duration | 2 ns | 10 ns |
| Pulse peak power | 1.5 MW | 1.4 MW |
| Repetition frequency | 100 Hz | 100 Hz |
| Measurement spot | < 100 $\mu$m | < 200 $\mu$m |
| Focal length of focusing mirror | 101.6 mm | 203.2 mm |
| Fiber diameter | 900 $\mu$m | 400 $\mu$m |

It is preferred if the LIBS system comprises a high power laser.

In this example, by application of a high power laser the analytical performance of the system could be increased. However, the high power LIBS system can have the additional following advantages: A first advantage is that better practical implementation can be achieved, because the distance to the sample can be larger, which makes the system easier to be implemented and to be installed and additionally reduces the contamination of the window next to the laser. Another advantage is that it is possible to achieve a two times larger measurement spot and an about 4.5 times higher pulse energy when compared to a non-high power LIBS system. Another advantage is that more light can reach the detector, which opens the door for using several detectors to e.g. expand the wavelength range coverage. In particular, it is possible with such a high power LIBS system to determine potassium (K) and sodium (Na).

Apart from the intensity in the spectrum, the higher pulse power and the larger measurement spot can lead to a higher amount of measured spectra per plot when compared with an application of fiber laser. With high power LIBS the average spectra per plot can be more than two times higher when compared with fiber laser. This means that more material per plot can be measured (increased sample cross-section), which can be advantageous, in particular in case of heterogeneous material such as a crop sample comprising target plant material adhered with soil tare.

In an example, for the determination of potassium, the spectra were normalized on the H$\alpha$ line at 565.5 nm and the range limited to 764 till 772 nm for determining potassium. The noise was lower in the high power spectra, although the signal heights were at the same level due to the normalization. Stated in numbers the signal-to-noise ratio was about 8 times better for the high power LIBS. Therefore it can be preferred to use high power LIBS.

In an example for the determination of sodium, the spectra were normalized on the H$\alpha$ line at 565.5 nm and the range was limited to 586 till 591 nm, to the sodium emission line. The noise was lower in the high power spectra. For sodium, the signal-to-noise ratio was about two times better for the high power LIBS. In the calibration as well in the cross-validation, the high power LIBS can perform about 20 % better than the fiber LIBS. The High Power LIBS can for example reach an $R^2$ of 0.83 and a root mean square error (RMSE) of 0.38 mmol / 100 g sugar beet.

The results of this example show exemplarily for sodium and potassium, that LIBS is well suited for analysis of chemical soil parameters in the soil tare, in particular for analysis of contents of main nutrients, such as potassium, magnesium, calcium, nitrogen and phosphorus, and preferably for analysis of total contents of trace nutrients such as iron and manganese. With such a direct analysis of specific macro- and micro-nutrients in the soil tare, in particular in the soil, it is possible to determine parameters of the soil tare in the growing areas.

According to a preferred embodiment, the method comprises generating first calibration data, comprising taking a sample of the crop sample comprising target plant material adhered with soil tare and dividing the sample into a first sample and a second sample, preferably chopping the target plant material adhered with soil tare of the first sample, and/or preferably moving the first sample along a sensor that is adapted to receive electromagnetic waves and/or along a camera that is adapted to receive electromagnetic waves, analysis of the first sample by, preferably continuously, emitting electromagnetic waves towards the first sample, receiving electromagnetic waves reflected from the first sample, and preferably processing the received electromagnetic waves, reference analysis of the second sample by determining a first mass of the second sample, removing at least a part of the soil tare from the second sample and subsequently determining a second mass of the second sample, and calculating the percentage by mass of the soil tare with respect to the first mass of the second sample by using the first mass of the second sample and the second mass of the second sample, and/or the percentage by mass of the soil tare with respect to the mass of the target plant material by using the first mass of the second sample and the second mass of the second sample, comparing the results of the analysis of the first sample with the results of the reference analysis of the second sample.

Removing at least a part of the soil tare comprises removing preferably at least 95 wt.%, in particular at least 98 wt.%, particularly preferred at least 99 wt.% of the soil tare from the crop sample comprising target plant material adhered with soil tare.

The sample of the crop sample comprising target plant material adhered with soil tare can be a sample of sugar beet pieces. The sample of the crop sample comprising target plant material adhered with soil tare can for example comprise 10 kg or 20 kg or 30 kg of the crop sample comprising target plant material adhered with soil tare, which preferably comprises sugar beets and/or sugar beet pieces. Other amounts of the crop sample comprising target plant material adhered with soil tare can also be used. Preferably, receiving electromagnetic waves can be understood as receiving electromagnetic waves that are reflected from the sample. Reference analysis can comprise at least one or several measurements. Preferably, by comparing the results obtained from the spectroscopic analysis with the results obtained from the reference analysis, calibration data can be generated.

Preferably, the spectroscopic analysis is carried out continuously. Preferably, first calibration data is generated by repeatedly taking samples, conducting spectroscopic analyses of the samples. Preferably, calibration data is generated by repeatedly comparing results of spectroscopic analyses with results from reference analyses. It is preferred if this procedure is repeated several times, in particular more than 100 times, preferably more than 1000 times. Preferably, this procedure conducted on the crop sample comprising target plant material adhered with soil tare with different components, preferably on a relatively wet crop sample comprising target plant material adhered with soil tare, on a relatively dry crop sample comprising target plant material adhered with soil tare, on a crop sample comprising target plant material adhered with soil tare with a relatively high percentage by mass of soil tare, on a crop sample comprising target plant material adhered with soil tare with a relatively low percentage by mass of soil tare.

Preferably, first calibration data is generated over a time period of at least several days, in particular of at least several weeks and/or of at least several months and/or of several years.

Generating first calibration data can also be carried out in a static process, wherein the sample of the crop sample comprising target plant material adhered with soil tare is not moved along a sensor. Preferably, within such a static process, the sample is located at a defined position, in particular under a sensor that is adapted to receive electromagnetic waves.

An advantage of generating first calibration data in the described way is that the calibration data can be used for reliably determining percentage by mass of the soil tare.

From filtered images, which can be generated by using a camera, a calibration can be carried out that can provide the predicted amount of soil tare in the crop sample comprising target plant material adhered with soil tare. To develop such a calibration, preferably the sample can be split into two parts, so that a comparison can be made between target material and the crop sample comprising target plant material adhered with soil tare.

Preferably, in order to develop, optimise and validate a calibration model for a qualitative NIRS procedure used for identification or qualification, sets of samples are required: the calibration set (i.e. the group of samples that are used to build the model parameters), the cross-validation set (i.e. samples temporarily excluded from model development but still ultimately involved in the development of the model), and the independent validation set (i.e. samples that have no input into the development of the model). It is preferred if the validation set of samples (for external validation) is completely independent of the calibration set. A comparison of results can be obtained by analysis of the same set of samples by the NIRS procedure and the reference method forms part of the validation of NIRS, along with independently determined parameters, such as intermediate precision.

In a preferred embodiment, generating first calibration data further comprises one or several of the following steps: converting the received electromagnetic waves into a spectral signal, in particular by using near-infrared spectroscopy (NIRS), and/or into at least one digital image, preferably several digital images, in particular RGB images and/or hyperspectral imaging, and/or pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or pre-processing the at least one digital image using a filter, wherein preferably the filter is arranged for using at least one colour threshold to distinguish between target plant material and soil tare, and/or removing spectral signals that are not converted from electromagnetic waves that are reflected from the first sample, preferably by differentiating the spectral signals using classification and/or filtering, in particular using mathematical filtering methods, and/or averaging spectral signals to one spectral signal, and/or carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

Preferably, the spectral signal is converted by using spectroscopy, in particular near-infrared spectroscopy (NIRS). In particular, a combination of different spectroscopy methods as well in combination with hyperspectral images and/or RGB images can be used, wherein preferably the spectral signals converted by using different spectroscopy methods or different methods can be combined.

Preferably, the method comprises generating second calibration data, comprising taking a sample of the crop sample comprising target plant material adhered with soil tare, preferably a determined amount, for example 10kg, preferably chopping the target plant material adhered with soil tare, and preferably moving the sample along a sensor that is adapted to receive electromagnetic waves, spectroscopic analysis of the sample by, preferably continuously, emitting electromagnetic waves towards the sample, receiving electromagnetic waves, and converting the received electromagnetic waves into a spectral signal, in particular by using laser-induced breakdown spectroscopy (LIBS) and preferably at least one other analytical method, reference analysis of the soil tare by conducting measurements, such as polarimetry, flame photometry, fluorometric o-5 phthalaldehyde (OPA) method, copper method, immobilized enzyme biosensor method, oven method, atomic absorption spectrometry (AAS), X-ray fluorescence spectroscopy (XRFS), inductively coupled plasma-atomic emission spectrometry (ICP-AES), and/or others, comparing the results of the spectroscopic analysis with the results of the reference analysis, wherein preferably generating second calibration data further comprises one or several of the following steps: pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or removing spectral signals that are not converted from electromagnetic waves that are reflected from the crop sample comprising target plant material adhered with soil tare, preferably by differentiating the spectral signals using classification and/or filtering, in particular using mathematical filtering methods, and/or averaging spectral signals to one spectral signal, and/or carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

Preferably the spectroscopic analysis is carried out continuously. Preferably, the second calibration data is generated by repeatedly taking samples, conducting spectroscopic analyses of the samples. Preferably, calibration data is generated by repeatedly comparing results of spectroscopic analyses with results from reference analyses. It is preferred if this procedure is repeated several times, in particular more than 100 times, preferably more than 1000 times. Preferably, this procedure conducted on the crop sample comprising target plant material adhered with soil tare with different components, preferably on a relatively wet crop sample comprising target plant material adhered with soil tare, on a relatively dry crop sample comprising target plant material adhered with soil tare, on a crop sample comprising target plant material adhered with soil tare with a relatively high percentage by mass of soil tare, on a crop sample comprising target plant material adhered with soil tare with a relatively low percentage by mass of soil tare.

Preferably, second calibration data is generated over a time period of at least several days, in particular of at least several weeks and/or of at least several months and/or of several years.

Generating second calibration data can also be carried out in a static process, wherein the sample of the crop sample comprising target plant material adhered with soil tare is not moved along a sensor. Preferably, within such a static process, the sample is located at a defined position, in particular under a sensor that is adapted to receive electromagnetic waves.

An advantage of generating second calibration data in the described way is that the calibration data can be used for reliably determining components of the soil tare.

Preferably, by combining LIBS with further analytical methods a detailed soil analysis can be carried out, comprising analysing soil density and/or soil texture and/or soil pH value and/or quality of fertilizers and/or humification of soil and/or soil fertility.

According to a preferred embodiment, the method comprises comparing data derived from processing the electromagnetic waves with the first calibration data and dependent on the comparison determine the percentage by mass of the target plant material and/or the percentage by mass of the soil tare, and/or processing the electromagnetic waves by spectroscopic analysis and comparing data derived therefrom with the second calibration data and dependent on the comparison determine components of the soil tare.

With the described method it can preferably be achieved both determination of percentage by mass of the soil tare and determination of components of the soil tare.

According to a further preferred embodiment, the method comprises chopping the crop sample comprising target plant material adhered with soil tare.

To determine the percentage by mass of the soil tare, it is preferred that the crop sample comprising target plant material adhered with soil tare is chopped before emitting electromagnetic waves towards the crop sample comprising target plant material adhered with soil tare.

An advantage of conducting spectroscopy on a chopped crop sample comprising target plant material adhered with soil tare is that the results obtained are more reliable due to a better homogeneity of the target material and the soil tare.

For example, an analysis of soil tare on a whole sugar beet with different sensors can lead to high errors in precision, because sensors are typically working in one dimension and soil usually adheres unevenly to a sugar beet surface. Due to chopping the crop sample comprising target plant material adhered with soil tare, both soil tare and target plant material can be equally distributed within a sample.

Preferably, the method comprises homogeneously distributing the crop sample comprising target plant material adhered with soil tare onto the transport device, preferably with a roller that is arranged above the transport device, moving the crop sample comprising target plant material adhered with soil tare along a sensor that is adapted to receive electromagnetic waves and/or along a camera that is adapted to receive electromagnetic waves, wherein preferably moving the crop sample comprising target plant material adhered with soil tare is conducted using a transport device, preferably a conveyor belt, preferably with a transport velocity within a range of 0.05 m/s to 20 m/s, in particular 0.05 m/s to 10 10 m/s, preferably 0.5 m/s to 5 m/s.

According to a further preferred embodiment, processing the received electromagnetic waves comprises converting the received electromagnetic waves into a spectral signal, and/or converting the received electromagnetic waves into at least one digital image, preferably several digital images, in particular RGB images.

Preferably, with a combination of one or several spectral signals and one or several digital images the percentage by mass of the soil tare and components of the soil tare can be determined.

According to a further preferred embodiment, the method comprises illuminating the crop sample comprising target plant material adhered with soil tare to reduce and/or minimize shadows, and/or filtering the at least one digital image, wherein the filter is adapted to distinguish between target plant material and soil tare, preferably by using at least one colour threshold.

Preferably, a light source is used to illuminate the crop sample comprising target plant material adhered with soil tare. By illuminating the crop sample comprising target plant material adhered with soil tare, shadows can be removed and/or minimised.

It is preferred if a filter is applied to the digital image or the digital images. Preferably, by applying such a filter it is possible to distinguish between target material and soil tare. Such a filter can for example comprise a threshold.

In a further preferred embodiment, emitting electromagnetic waves towards the crop sample comprising target plant material adhered with soil tare is conducted continuously and/or while the crop sample comprising target plant material adhered with soil tare are moving along the sensor and/or along the camera, and/or receiving electromagnetic waves reflected from the crop sample comprising target plant material adhered with soil tare is conducted continuously and/or while the crop sample comprising target plant material adhered with soil tare is moving along the sensor and/or along the camera.

Preferably, the method described herein is conducted continuously. The spectroscopic analysis can be carried out on the crop sample comprising target plant material adhered with soil tare, in particular on the chopped crop sample comprising target plant material adhered with soil tare, that is moved along an analysis assembly that comprises a spectroscopic device for carrying out spectroscopic analysis. The spectroscopic analysis can be adapted to the moving speed of the crop sample comprising target plant material adhered with soil tare relative to the spectroscopic device. Preferably, the analysis assembly comprises at least one additional analysis device such as a camera for capturing images of the moving crop sample comprising target plant material adhered with soil tare.

It is preferred that the wavelength of the electromagnetic waves lies in the infrared spectrum, preferably in the near-infrared spectrum, and/or in the microwave region and/or in the visible spectrum, and/or in the ultraviolet spectrum, and/or that the spectral signal is converted by using spectroscopy, in particular near-infrared spectroscopy (NIRS), mid-infrared- spectroscopy, far-infrared spectroscopy, terahertz-spectroscopy and/or ultraviolet-visible spectroscopy (UV-Vis) and/or Raman spectroscopy and/or laser-induced breakdown spectroscopy (LIBS), and/or fluorescence spectroscopy and/or hyperspectral imaging, and/or nuclear magnetic resonance and/or a combination of hyperspectral imaging with different spectroscopic approaches and/or combinations of different spectroscopic methods, and/or that receiving electromagnetic waves is conducted using a camera and/or using a combination of a camera with one or several spectroscopy methods, in particular a combination of RGB camera with near-infrared spectroscopy and/or hyperspectral imaging.

Preferably, the infrared spectrum comprises wavelengths in a range from 750 nm to 1,000,000 nm. Preferably, the near-infrared spectrum comprises wavelengths in a range from 750 nm to 2,500 nm. Preferably, the visible spectrum comprises wavelengths in a range from 400 nm to 750 nm. Further preferably, the wavelength of the electromagnetic waves lies in the ultraviolet spectrum, wherein preferably, the ultraviolet spectrum comprises wavelengths in a range from 10 nm to 400 nm.

Preferably, the spectral signal is converted by using spectroscopy, in particular near-infrared spectroscopy (NIRS), and/or mid infrared spectroscopy and/or far infrared spectroscopy and/or ultraviolet-visible spectroscopy (UV-Vis) and/or Raman spectroscopy and/or laser-induced breakdown spectroscopy (LIBS). In particular a combination of different spectroscopy methods as well in combination with hyperspectral images can be used. Preferably, nuclear magnetic resonance may be also used in combination with any of the above-mentioned spectroscopic methods.

In a further preferred embodiment, the method is performed as a continuous process, preferably by emitting electromagnetic waves and/or receiving electromagnetic waves and/or converting the received electromagnetic waves into a spectral signal in intervals of less than 100 ms, in particular of less than 50 ms, preferably in intervals of 10 ms, 20 ms, 30 ms or 40 ms, and/or by emitting electromagnetic waves and/or receiving electromagnetic waves and/or converting the received electromagnetic waves into a spectral signal repeatedly for at least 2 seconds, preferably at least 10 seconds, more preferably at least 20 seconds, more preferably at least 10 minutes, in particular at least 1 hour.

Preferably, the intervals are chosen in such a way that optimal results are obtained. In particular the intervals can be chosen dependent on the moving speed of the crop sample comprising target plant material adhered with soil tare relative to the sensor.

In particular it is preferred if the measurement cycle is in the range of 10 - 20 seconds. Other measurement cycles can be preferred depending on other parameters in order to obtain optimal results.

Preferably, the species of the target plant material is a root crop and/or a tuber crop, in particular Beta vulgaris and/or Solanum tuberosum, or at least a part thereof, and/or wherein the target plant material comprises or consists of sugar beets.

The target plant material can be a part of root crops and/or tuber crops, in particular of the species Beta vulgaris and/or Solanum tuberosum. Preferably, the target plant material comprises or is one or several of the following group: sugar beet, spinach beet, swiss chard, beetroot, mangelwurzel, potato.

In a further preferred embodiment, the method comprises processing the spectral signal for determining components in the soil tare, and/or comparing the spectral signal with the second calibration data and dependent on the comparison determine, preferably quantitatively, an amount and/or mass and/or mass fraction and/or volume fraction of components in the soil tare.

Preferably, the different components and the relative amount of the components in the soil tare can be determined by using the spectral signal and the second calibration data.

According to a further preferred embodiment, the components in the soil tare comprise one or several of the following group: minerals, in particular potassium, sodium, magnesium, calcium, nitrogen, phosphorus, trace nutrients, for example iron and/or manganese, humus content, soil pH value, nitrogen containing compounds, organic matter, carbohydrates, starch, aromatics, fatty acids, leaves, root tips, topped beets, pieces of beets, weed, soil density, soil texture quality of at least one fertilizer, humification, soil fertility.

Preferably, different components in the soil tare can be identified and analysed. In particular with the method described herein it is possible to determine components of interest. In particular by determining components information about the soil that is part of the soil tare can be obtained.

Obtaining information about the soil, such as for example humus content, soil pH value, potassium, sodium, magnesium, calcium, nitrogen, phosphorus, trace nutrients, and others can be valuable in order to analyse the conditions of the soil in the field from which the plant material was harvested. With such information about the soil it is possible to improve growing conditions in the fields and/or treat the fields in such a way that the growing conditions are improved. In addition, such information can be provided to the sugar factories, which thus receive information on the growing area of the beet and the quality that can be expected from it.

Preferably, the method comprises changing at least one breeding parameter and/or fertilizer application dependent on the amount of at least one of the determined components in the soil tare.

Preferably, with the information obtained regarding the components in the soil tare, a suitable fertilizer application for the field from which the plant material was harvested can be determined in order to optimize the growing conditions in the field.

It can also be possible to change breeding parameters dependent on the determined components in the soil tare in order to optimize breeding conditions in a field.

According to a further aspect, it is provided a method for generating first calibration data for analyzing a crop sample comprising a target plant material with soil tare adhered thereto, comprising taking a sample of the crop sample comprising target plant material adhered with soil tare, comprising target plant material and soil tare, and dividing the sample into a first sample and a second sample, preferably chopping the target plant material adhered with soil tare of the first sample, and/or preferably moving the first sample along a sensor that is adapted to receive electromagnetic waves and/or along a camera that is adapted to receive electromagnetic waves, analysis of the first sample by, preferably continuously, emitting electromagnetic waves towards the first sample, receiving electromagnetic waves reflected from the first sample, and preferably processing the received electromagnetic waves, reference analysis of the second sample by determining a first mass of the second sample, removing at least a part of the soil tare from the second sample and subsequently determining a second mass of the second sample, and calculating the percentage by mass of the soil tare with respect to the first mass of the second sample by using the first mass of the second sample and the second mass of the second sample, and/or the percentage by mass of the soil tare with respect to the mass of the target plant material by using the first mass of the second sample and the second mass of the second sample, comparing the results of the analysis of the first sample with the results of the reference analysis of the second sample.

It is preferred that the method comprises converting the received electromagnetic waves into a spectral signal, and/or into at least one digital image, preferably several digital images, in particular RGB images, and/or pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or pre-processing the at least one digital image using a filter, wherein preferably the filter is arranged for using at least one colour threshold to distinguish between target plant material and soil tare, and/or removing spectral signals that are not converted from electromagnetic waves that are reflected from the first sample, preferably by differentiating the spectral signals using classification and/or filtering, in particular using mathematical filtering methods, and/or averaging spectral signals to one spectral signal, and/or carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

According to a further aspect, it is provided an analysis assembly for analyzing a crop sample comprising a target plant material with soil tare adhered thereto, wherein the analysis assembly is arranged to emit electromagnetic waves towards the crop sample comprising target plant material adhered with soil tare, wherein the analysis assembly is arranged to receive electromagnetic waves reflected from the crop sample comprising target plant material adhered with soil tare, wherein the analysis assembly is arranged to convert received reflected electromagnetic waves into a spectral signal and/or into digital images, preferably RGB images, wherein the analysis assembly is arranged to process the spectral signal and/or the digital images for determining the percentage by mass of the target plant material and/or the percentage by mass of the unwanted plant material and/or components in the unwanted plant material.

Preferably, the analysis assembly comprises a spectroscopic device, in particular a near-infrared spectroscopic device. It can be preferable if the analysis assembly comprises a camera for taking images, in particular RGB images.

Such an analysis assembly can preferably be mounted at a desired position. In particular, the analysis assembly can designed in such a way that it can be moved to another position.

According to a further aspect, it is provided an arrangement for analyzing a crop sample comprising a target plant material with soil tare adhered thereto, the arrangement comprising a receiving section, preferably of a production facility, in particular a sugar production facility, for receiving the crop sample comprising target plant material adhered with soil tare, in particular soiled sugar beets, comprising target plant material and soil tare, a chopping device for chopping the crop sample comprising target plant material adhered with soil tare into pieces, an analysis assembly according to the preceding claim, wherein preferably the analysis assembly is arranged above a transport device on which pieces of the crop sample comprising target plant material adhered with soil tare are moved relative to the analysis assembly.

According to a further aspect, it is provided a sugar production facility comprising an arrangement as described herein.

Sugar production is preferably conducted in such a sugar production facility. In particular, a sugar production facility is understood to be a sugar factory or a sugar beet-processing factory.

Preferably, the sugar production facility is adapted to process at least 500 tons of sugar beets per day, or at least 1,000 tons of sugar beets per day, preferably at least 5,000 tons of sugar beets per day, in particular at least 10,000 tons of sugar beets per day. The sugar beets can comprise several tons of sugar beets. Preferably, the sugar beets are delivered to the sugar production facility by truck or train. Preferably, the plurality of sugar beets can be provided from a receiving station and/or a storage station.

Preferably, sugar is produced in the sugar production facility. Preferably, producing sugar comprises slicing sugar beets into sliced sugar beets, and preferably producing a raw juice from the sliced sugar beets, comprising extracting sugar the sliced sugar beets in an extraction process, wherein the sliced sugar beets are arranged in hot water and the hot water flows in opposite direction to a direction in which the sliced sugar beets are transported, wherein sugar is removed from the sliced sugar beets into the hot water and the raw juice is made from the hot water containing the extracted sugar. Preferably, the raw juice contains about 98 wt.% of the sugar contained in the sugar beets and organic and inorganic constituents that can be referred to as non-sugars from the sugar beets.

According to a further aspect, it is provided a use of an analysis assembly in a sugar production facility as described herein for analyzing a crop sample comprising a target plant material with soil tare adhered thereto.

As to the advantages, preferred embodiments and details of the individual different aspects and their preferred embodiments, reference is also made to the corresponding advantages, preferred embodiments and details described with reference to the respective other aspects.

Further advantageous embodiments result from the combination of individual, several or all of the preferred features described herein.

Preferred embodiments shall now be described with reference to the attached drawings, in which

Fig. 1:    shows a schematic representation of an example of a method for analyzing a crop sample comprising a target plant material with soil tare adhered thereto;

Fig. 2a:    shows a schematic representation of an example of a method for analyzing a crop sample comprising a target plant material with soil tare adhered thereto;

Fig. 2b    shows a schematic representation of an example of a method for analyzing a crop sample comprising a target plant material with soil tare adhered thereto;

Fig. 3:    shows a schematic representation of an example of a receiving section for receiving sugar beets and an analysis assembly for analyzing a crop sample comprising a target plant material with soil tare adhered thereto;

Fig. 4:    shows an example of spectral signals obtained from using near-infrared spectroscopy on sugar beet pieces;

Fig. 5:    shows a diagram with values obtained by near-infrared spectroscopy (NIRS) analysis of soil tare;

Fig. 6a:    shows a diagram for calibration data with predicted values and reference values of percentage by mass of soil tare;

Fig. 6b:    shows a diagram with absolute values of reference values shown in Fig. 6a;

Fig. 7:    shows a schematic representation of an example of a method for determining first calibration data.

In the figures, elements with the same or comparable functions are indicated with the same reference numerals.

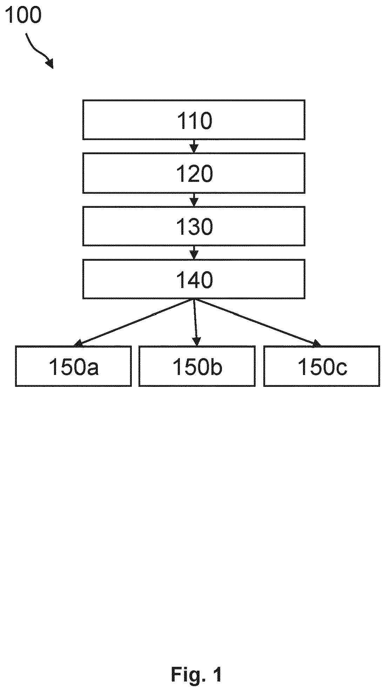

Fig. 1 shows a method 100 for analyzing a crop sample comprising a target plant material with soil tare adhered thereto, in particular soiled plant material. The method comprises the steps described in the following. In a step 110, receiving the crop sample comprising target plant material adhered with soil tare comprising target plant material and soil tare. In a step 120, emitting electromagnetic waves towards the crop sample comprising target plant material adhered with soil tare. In a step 130, receiving electromagnetic waves reflected from the crop sample comprising target plant material adhered with soil tare. In a step 140, processing the received electromagnetic waves using an analysis assembly. Then one or several of the following steps are possible. In a step 150a, determining a percentage by mass of the target plant material, and/or in a step 150b, determining a percentage by mass of the soil tare, and/or in a step 150c, determining components of the soil tare.

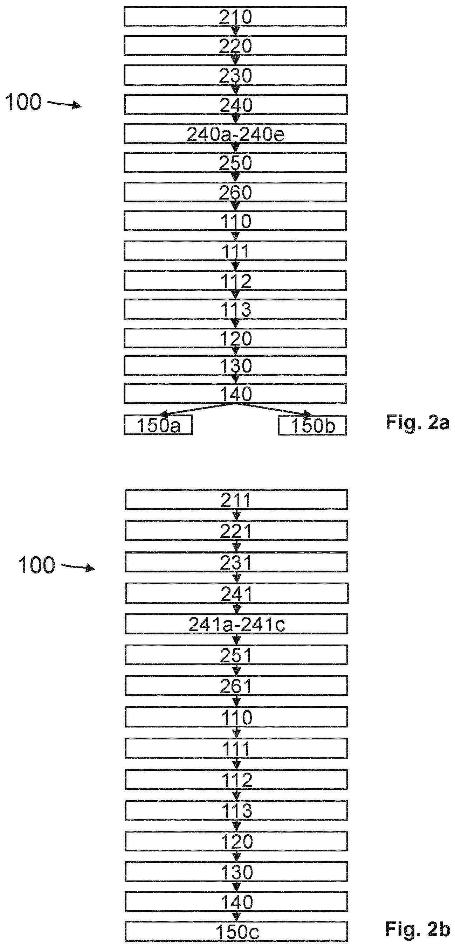

Fig. 2a shows a method 100 for analyzing a crop sample comprising a target plant material with soil tare adhered thereto, in particular soiled plant material. In this example a percentage by mass of the target plant material, and/or a percentage by mass of the soil tare can be determined. The method comprises the steps described in the following. First, a calibration is carried out. In a step 210, generating first calibration data, comprising the following steps. In a step 220, taking a sample of the crop sample comprising target plant material adhered with soil tare and dividing the sample into a first sample and a second sample. In a step 230, chopping the target plant material adhered with soil tare of the first sample and moving the first sample along a sensor that is adapted to receive electromagnetic waves and along a camera that is adapted to receive electromagnetic waves. In a step 240, analysis of the first sample by continuously emitting electromagnetic waves towards the first sample, receiving electromagnetic waves from the first sample, and processing the received electromagnetic waves.

Generating first calibration data can further comprise one or several of the following steps: In a step 240a, converting the received electromagnetic waves into a spectral signal, preferably by using NIRS and/or into digital images, preferably RGB images. In a step 240b, pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out. In a step 240c, pre-processing the at least one digital image using a filter, wherein preferably the filter is arranged for using at least one colour threshold to distinguish between target plant material and soil tare. In a step 240d, removing spectral signals that are not converted from electromagnetic waves that are reflected from the first sample, preferably by differentiating the spectral signals using classification and/or filtering, in particular using mathematical filtering methods. In a step 240e, averaging spectral signals to one spectral signal.

In a step 250, reference analysis of the second sample by determining a first mass of the second sample, removing at least a part of the soil tare from the second sample and subsequently determining a second mass of the second sample, and calculating the percentage by mass of the soil tare with respect to the first mass of the second sample by using the first mass of the second sample and the second mass of the second sample and/or calculating the percentage by mass of the soil tare with respect to the mass of the target plant material by using the first mass of the second sample and the second mass of the second sample. In a step 260, carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks. Further in step 260, comparing the results of the analysis of the first sample with the results of the reference analysis of the second sample.

After carrying out this calibration, the following steps are carried out. In a step 110, receiving the crop sample comprising target plant material adhered with soil tare comprising target plant material and soil tare. In a step 111, chopping the crop sample comprising target plant material adhered with soil tare into pieces. In a step 112, homogeneously distributing the crop sample comprising target plant material adhered with soil tare onto the transport device, preferably with a roller that is arranged above the transport device. In a step 113, moving the crop sample comprising target plant material adhered with soil tare along a sensor that is adapted to receive electromagnetic waves and/or along a camera that is adapted to receive electromagnetic waves, wherein preferably moving the crop sample comprising target plant material adhered with soil tare is conducted using a transport device, preferably a conveyor belt, preferably with a transport velocity within a range of 0.05 m/s to 20 m/s, in particular 0.05 m/s to 10 10 m/s, preferably 0.5 m/s to 5 m/s.

In a step 120, emitting electromagnetic waves towards the crop sample comprising target plant material adhered with soil tare. In a step 130, receiving electromagnetic waves reflected from the crop sample comprising target plant material adhered with soil tare. In a step 140, processing the received electromagnetic waves using an analysis assembly. Then one or several of the following steps are possible. In a step 150a, determining a percentage by mass of the target plant material, and/or in a step 150b, determining a percentage by mass of the soil tare.

Fig. 2b shows a method 100 for analyzing a crop sample comprising a target plant material with soil tare adhered thereto, in particular soiled plant material. In this example components of the soil tare can be determined. The method comprises the steps described in the following. First, a calibration is carried out. In a step 211, generating second calibration data, wherein step 211 comprises the following steps: In a step 221, taking a sample of the crop sample comprising target plant material adhered with soil tare, preferably a determined amount, for example 10kg. In a step 231, chopping the target plant material adhered with soil tare, and preferably moving the sample along a sensor that is adapted to receive electromagnetic waves. In a step 241, spectroscopic analysis of the sample by, preferably continuously, emitting electromagnetic waves towards the sample, receiving electromagnetic waves, and converting the received electromagnetic waves into a spectral signal, in particular by using laser-induced breakdown spectroscopy (LIBS) and preferably at least one other analytical method.

Generating second calibration data can further comprise one or several of the following steps. In a step 241a, pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out. In a step 241b, removing spectral signals that are not converted from electromagnetic waves that are reflected from the crop sample comprising target plant material adhered with soil tare, preferably by differentiating the spectral signals using classification and/or filtering, in particular using mathematical filtering methods. In a step 241c, averaging spectral signals to one spectral signal.

In a step 251, reference analysis of the soil tare by conducting measurements, such as polarimetry, flame photometry, fluorometric o-5 phthalaldehyde (OPA) method, copper method, immobilized enzyme biosensor method, oven method, atomic absorption spectrometry (AAS);, X-ray fluorescence spectroscopy (XRFS);, inductively coupled plasma- atomic emission spectrometry (ICP-AES), and/or others. In a step 261, carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks. Further in step 261, comparing the results of the spectroscopic analysis with the results of the reference analysis.

After carrying out this calibration, the following steps are carried out. In a step 110, receiving the crop sample comprising target plant material adhered with soil tare comprising target plant material and soil tare. In a step 111, chopping the crop sample comprising target plant material adhered with soil tare into pieces. In a step 112, homogeneously distributing the crop sample comprising target plant material adhered with soil tare onto the transport device, preferably with a roller that is arranged above the transport device. In a step 113, moving the crop sample comprising target plant material adhered with soil tare along a sensor that is adapted to receive electromagnetic waves and/or along a camera that is adapted to receive electromagnetic waves, wherein preferably moving the crop sample comprising target plant material adhered with soil tare is conducted using a transport device, preferably a conveyor belt, preferably with a transport velocity within a range of 0.05 m/s to 20 m/s, in particular 0.05 m/s to 10 10 m/s, preferably 0.5 m/s to 5 m/s.

In a step 120, emitting electromagnetic waves towards the crop sample comprising target plant material adhered with soil tare. In a step 130, receiving electromagnetic waves reflected from the crop sample comprising target plant material adhered with soil tare. In a step 140, processing the received electromagnetic waves using an analysis assembly. Then one or several of the following steps are possible. In a step 150c, determining components of the soil tare.

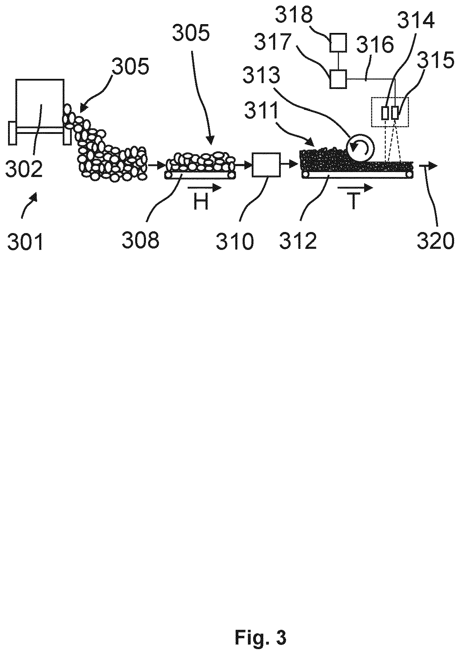

Fig. 3 shows a preferred example of a section of a sugar production facility with an arrangement for determining components of the soil tare and for determining the percentage by mass of the soil tare and/or the percentage by mass of the target material. Sugar beets 305, which is the target material, together with soil tare thereon, in particular soil, are transported to the receiving section 301 by a truck 302. At the receiving section 301, the sugar beets 305 are removed from the truck 302 and optionally stored for some period of time. Then, directly from the truck 302 or after optional storage, the sugar beets 305 are conveyed along a hopping direction H to a chopping device 310 using a sugar beet hopper 308. With the chopping device 310 the sugar beets 305 are cut into sugar beet pieces, wherein the chopping device cuts the sugar beets 305 into sugar beet pieces 311.

The sugar beet pieces 311 are arranged on a transport device 312, which can be a conveyor belt. The sugar beet pieces 311 are transported in a transport direction T from an upstream end of the transport device to a downstream end of the transport device, wherein the transport device 312 generates a stream of sugar beet pieces that moves along the transport direction T. A roller 313 is arranged above the transport device that is adapted to homogeneously distribute and compact the sugar beet pieces that move on the transport device 312 along the transport direction T. Above the transport device 312, an analysis assembly is arranged. Wherein the analysis assembly is arranged to emit electromagnetic waves towards the sugar beet pieces 311 that are arranged on the transport device 312 by using an electromagnetic wave source 314. Furthermore, the analysis assembly is arranged to receive reflected electromagnetic waves by using a sensor 315 that is located directly downstream of the roller 313. The sensor 315 is arranged for detecting the reflected electromagnetic waves from the surface of the sugar beet pieces 312, for example in the wavelength range from 850 nm to 1650 nm. Furthermore, the analysis assembly is arranged to convert the received reflected electromagnetic waves into a spectral signal.

The sensor 315 can continuously record reflected electromagnetic waves and transmit the data via an optical fiber 316 to a spectrometer 317, which converts the spectrally resolved reflected electromagnetic wavelengths into spectral signals. During the stream of sugar beet pieces with soil tare several of such spectral signals are produced, which can be filtered and averaged by a processor 318. By comparison with suitable calibration data, components of the soil tare can be determined and the percentage by mass of the soil tare and/or the percentage by mass of the target material can be determined.

The sugar beet pieces 311 with the soil tare thereon are then cleaned or washed in order to remove the soil tare thereon at least to a larger part and then introduced 320 to a sugar production process (not shown) in a sugar production facility.

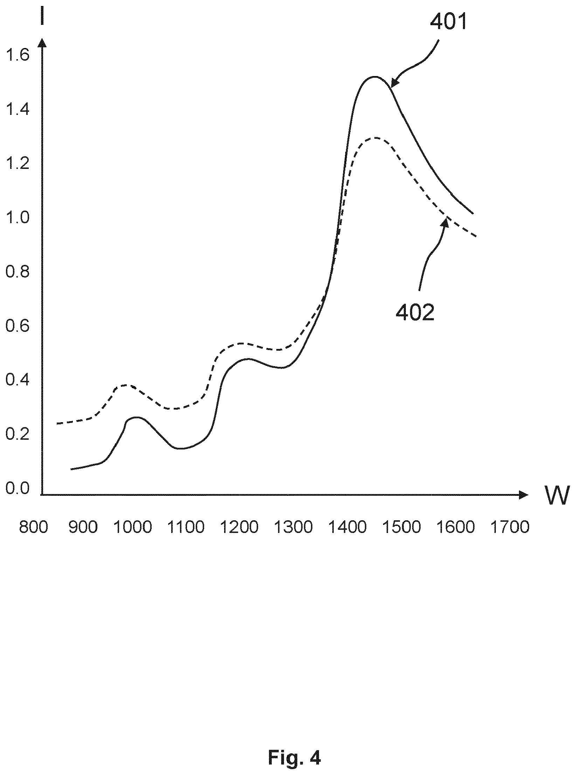

Fig. 4 shows an example of two spectral signals 401, 402 obtained from using near-infrared spectroscopy on sugar beet pieces for sugar production. To generate such spectral signals 401, 402, first, electromagnetic waves are emitted towards sugar beet pieces that are arranged on the transport device by using an electromagnetic wave source. Then, reflected electromagnetic waves are received by using a sensor, wherein the sensor is arranged for detecting the reflected electromagnetic waves from the surface of the sugar beet pieces. Then, the received reflected electromagnetic waves are converted into a spectral signal using a near-infrared spectrometer. In the shown example, reflected electromagnetic waves in the wavelength range from about 850 nm to 1650 nm are received. In the shown diagram, the intensity I is plotted versus the wavelength W (in nm). The spectral signals represents typical curves representing spectral signals for chopped sugar beet pieces that are washed and therefore pre-cleaned (this is the signal 401) and for chopped sugar beet pieces that are not pre-cleaned and therefore include more soil tare (this is signal 402). During a stream of sugar beet pieces several of such spectral signals can be produced, which can be filtered and averaged by a processor. Due to the difference in the spectral signals from cleaned and non-cleaned sugar beet pieces it is possible to determine the amount of soil tare and therefore to determine the percentage by mass of the soil tare only by using information obtained by using spectroscopy.

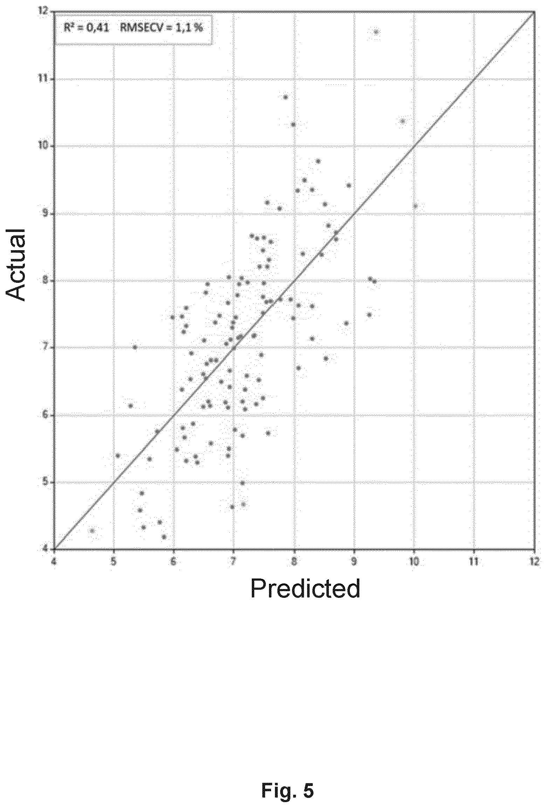

Fig. 5 shows a diagram with values obtained by near-infrared spectroscopy (NIRS) analysis of soil tare. Actual values are plotted versus predicted values. It can be seen that the dots, each representing a measurement, correlate in the diagram. In average, the actual values can be predicted relatively accurate.

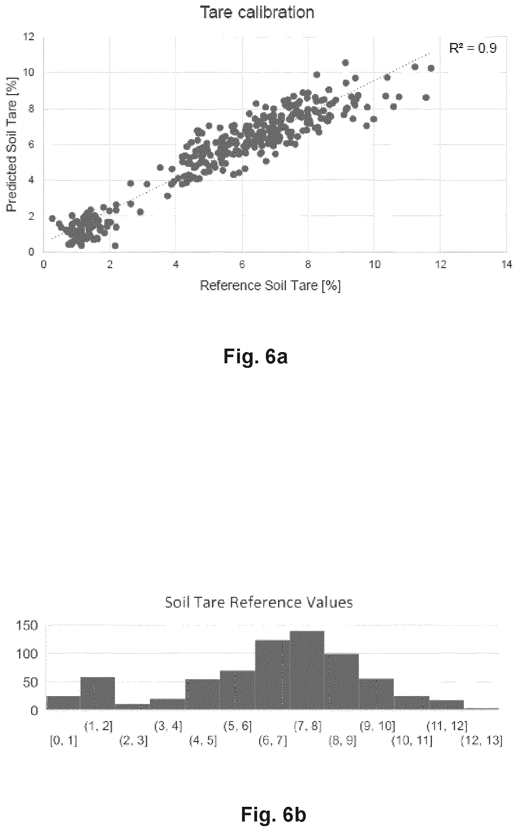

Fig. 6a shows a diagram for calibration data with predicted values and reference values of percentage by mass of soil tare. In this figure, the predicted soil tare in percent is understood to be a predicted percentage by mass of soil tare that was determined by using near-infrared spectroscopy (NIRS) analysis. The reference soil tare in percent is understood to be the percentage by mass of the soil tare determined by reference analysis. It can be seen that the dots, each representing a measurement, show a high correlation of $R^2=0.9$. This means that based on these determined values, it can be shown that the percentage by mass of the soil tare can be predicted relatively precisely by using information obtained using near-infrared spectroscopy (NIRS) analysis.

Fig. 6b shows a diagram with absolute values of reference values shown in Fig. 6a. Several hundred measurements have been conducted, most of them in the region of 6-9 percentage by mass of the soil tare.

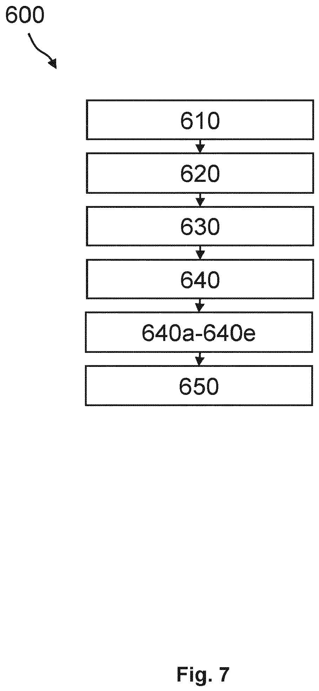

Fig. 7 shows a schematic representation of an example of a method 600 for determining first calibration data. The method comprises the following steps. In a step 610, taking a sample of the crop sample comprising target plant material adhered with soil tare, comprising target plant material and soil tare, and dividing the sample into a first sample and a second sample. In a step 620, chopping the target plant material adhered with soil tare of the first sample, and/or preferably moving the first sample along a sensor that is adapted to receive electromagnetic waves and/or along a camera that is adapted to receive electromagnetic waves. In a step 630, analysis of the first sample by, preferably continuously, emitting electromagnetic waves towards the first sample, receiving electromagnetic waves reflected from the first sample, and preferably processing the received electromagnetic waves. In a step 640, reference analysis of the second sample by determining a first mass of the second sample, removing at least a part of the soil tare from the second sample and subsequently determining a second mass of the second sample, and calculating the percentage by mass of the soil tare with respect to the first mass of the second sample by using the first mass of the second sample and the second mass of the second sample, and/or the percentage by mass of the soil tare with respect to the mass of the target plant material by using the first mass of the second sample and the second mass of the second sample.

In a step 640a, converting the received electromagnetic waves into a spectral signal, and/or into at least one digital image, preferably several digital images, in particular RGB images. In a step 640b, pre-processing the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out. In a step 640c, pre-processing the at least one digital image using a filter, wherein preferably the filter is arranged for using at least one colour threshold to distinguish between target plant material and soil tare. In a step 640d, removing spectral signals that are not converted from electromagnetic waves that are reflected from the first sample, preferably by differentiating the spectral signals using classification and/or filtering, in particular using mathematical filtering methods. In a step 640e, averaging spectral signals to one spectral signal

And in a step 650, carrying out multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks. Further in step 650, comparing the results of the analysis of the first sample with the results of the reference analysis of the second sample.

In the following, further examples and explanations with respect to the specifics and functioning of laser-induced breakdown spectroscopy (LIBS) analysis are given.

Apart from the intensity in the spectrum, a higher pulse power and a larger measurement spot lead to a higher amount of measured spectra per plot. Although the high power LIBS had one plot measurement with only 51 averages (which was probably due to the triggering of the measurement by hand), the average spectra per plot are > 2 times higher than with the Fiber LIBS. This means that more sample per plot is measured (increased sample cross-section), which helps due to the heterogeneous sample. Example for performance of the system to predict macronutrients were shown for potassium and sodium.

**Table Plot inspection:** Statistics of averaged spectra per plot

|  | Fiber LIBS | High Power LIBS |
|---|---|---|
| Average spectra per plot | 342 | 769 |
| Minimal spectra per plot | 216 | 51 |
| Maximal spectra per plot | 573 | 1182 |

For the determination of potassium, the spectra are normalized on the H$\alpha$ line (specific deep-red visible spectral line in the Balmer series with a wavelength of 656.28 nm in air) at 565.5 nm and the range limited to 764 till 772 nm, to the two potassium. The noise is lower in the high power spectra, although the signal heights are at the same level due to the normalization. Stated in numbers the Signal-to-noise ratio is ~ 8 times better for the high power LIBS.

**Table Merit of the potassium determination**

| | | Factors | Samples | Min. | Max. | Std. | R² | RMSE | RPD |
|---|---|---|---|---|---|---|---|---|---|
| **Fiber LIBS** | calibration | 2 | 37 | 2.74 | 3.90 | 0.38 | 0.77 | 0.18 | 2.1 |
| | Cross-validation | 2 | 37 | 2.74 | 3.90 | 0.38 | 0.60 | 0.25 | 1.5 |
| **High Power LIBS** | calibration | 2 | 37 | 2.74 | 3.90 | 0.38 | 0.76 | 0.18 | 2.1 |
| | Cross-validation | 2 | 37 | 2.74 | 3.90 | 0.38 | 0.65 | 0.23 | 1.6 |
| Std.: standard deviation of reference set<br>R2: coefficient of correlation<br>RMSE: root mean square error<br>RPD: residual prediction deviation | | | | | | | | | |

For the determination of sodium, the spectra are normalized on the H$\alpha$ line at 565.5 nm and the range is limited to 586 till 591 nm, to the sodium emission line. The noise is lower in the high power spectra. For Sodium, the Signal-to-noise ratio is ~ 2 times better for the High Power LIBS. In the calibration as well in the cross-validation, the High Power LIBS performs ~ 20 % better than the Fiber LIBS. The High Power LIBS reaches an $R^2$ of 0.83 and a RMSE of 0.38 mmol / 100 g fresh beet.

**Table Merit of the sodium determination**

| | | Factors | Samples | Min. | Max. | Std. | R² | RMSE | RPD |
|---|---|---|---|---|---|---|---|---|---|
| **Fiber LIBS** | calibration | 2 | 37 | 0.16 | 0.47 | 0.088 | 0.81 | 0.037 | 2.4 |
| | Cross-validation | 2 | 37 | 0.16 | 0.47 | 0.088 | 0.75 | 0.045 | 1.9 |
| **High Power LIBS** | calibration | 2 | 37 | 0.16 | 0.47 | 0.088 | 0.89 | 0.029 | 3 |
| | Cross-validation | 2 | 37 | 0.16 | 0.47 | 0.088 | 0.83 | 0.038 | 2.3 |
| Std.: standard deviation of reference set<br>R2: coefficient of correlation<br>RMSE: root mean square error<br>RPD: residual prediction deviation | | | | | | | | | |

The results shown on example of sodium and potassium, that LIBS can be used for analysis of chemical soil parameters as contents of the main nutrients, such as potassium, magnesium, calcium, nitrogen and phosphorus, and the total contents of the trace nutrients such as iron and manganese. About the direct analysis of specific macro- and micro-nutrients in tare, a specific tare content analysis based on different locations is possible and give sugar factories a better understanding of growing areas.

List of reference signs

100 method for analyzing a crop sample comprising a target plant material with soil tare adhered thereto

110 receiving the crop sample comprising target plant material adhered with soil tare comprising target plant material and soil tare

111 chopping the crop sample comprising target plant material adhered with soil tare

112 homogeneously distributing the crop sample comprising target plant material adhered with soil tare

113 moving the crop sample comprising target plant material adhered with soil tare along a sensor

120 emitting electromagnetic waves towards the crop sample comprising target plant material adhered with soil tare

130 receiving electromagnetic waves reflected from the crop sample comprising target plant material adhered with soil tare

140 processing the received electromagnetic waves using an analysis assembly

150a determining a percentage by mass of the target plant material

150b determining a percentage by mass of the soil tare

150c determining components of the soil tare.

210 generating first calibration data

211 generating second calibration data

221 taking a sample of the crop sample comprising target plant material adhered with soil tare

231 chopping the target plant material adhered with soil tare

241 spectroscopic analysis

241a pre-processing the spectral signal

241b removing spectral signals

241c averaging spectral signals

251 reference analysis

261 carrying out multiple and/or multivariate and/or linear regression and comparing the results

220 taking a sample of the crop sample comprising target plant material adhered with soil tare and dividing the sample

230 chopping the target plant material adhered with soil tare

240 analysis of the first sample

240a converting the received electromagnetic waves into a spectral signal

240b pre-processing the spectral signal

240c pre-processing the at least one digital image

240d removing spectral signals

240e averaging spectral signals

250 reference analysis of the second sample

260 carrying out multiple and/or multivariate and/or linear regression analysis and comparing the results

301 receiving section

310 chopping device

401 spectral signal of pre-cleaned chopped sugar beet pieces

402 spectral signal of chopped sugar beet pieces that are not pre-cleaned

610 taking a sample of the crop sample comprising target plant material adhered with soil tare

620 chopping the target plant material adhered with soil tare of the first sample

630 analysis of the first sample

640 reference analysis of the second sample

640a converting the received electromagnetic waves into a spectral signal

640b pre-processing the spectral signal

640c pre-processing the at least one digital image using a filter

640d removing spectral signals

640e averaging spectral signals

640f carrying out multiple and/or multivariate and/or linear regression analysis

650 comparing the results

**Claims**

1. A method for analyzing a crop sample comprising a target plant material with soil tare adhered thereto, comprising

   - receiving (110) a crop sample comprising target plant material adhered with soil tare,
   - emitting (120) electromagnetic waves towards the crop sample comprising target plant material adhered with soil tare,
   - receiving (130) electromagnetic waves reflected from the crop sample comprising target plant material adhered with soil tare,
   - processing (140) the received electromagnetic waves using an analysis assembly,
   - determining (150a-c) a percentage by mass of the target plant material and/or a percentage by mass of the soil tare and/or components of the soil tare.

2. The method according to the preceding claim, wherein

   - processing electromagnetic waves is conducted by using spectroscopy, in particular near-infrared spectroscopy, and preferably digital image analysis, in particular of RGB images, and/or hyperspectral imaging, for determining a percentage by mass of the target plant material and/or a percentage by mass of the soil tare, and/or
   - processing electromagnetic waves is conducted by using spectroscopy, in particular laser-induced breakdown spectroscopy (LIBS), and preferably at least one other analytical method, for determining components of the soil tare.

3. The method according to at least one of the preceding claims, comprising

   - generating (210) first calibration data, comprising

     ◦ taking a sample (220) of the crop sample comprising target plant material adhered with soil tare and dividing the sample into a first sample and a second sample,
     ◦ preferably chopping (230) the target plant material adhered with soil tare of the first sample, and/or preferably moving the first sample along a sensor that is adapted to receive electromagnetic waves and/or along a camera that is adapted to receive electromagnetic waves,
     ◦ analysis (240) of the first sample by, preferably continuously, emitting electromagnetic waves towards the first sample, receiving electromagnetic waves reflected from the first sample, and preferably processing the received electromagnetic waves,

   ◦ reference analysis (250) of the second sample by determining a first mass of the second sample, removing at least a part of the soil tare from the second sample and subsequently determining a second mass of the second sample, and calculating

      ■ the percentage by mass of the soil tare with respect to the first mass of the second sample by using the first mass of the second sample and the second mass of the second sample, and/or

      ■ the percentage by mass of the soil tare with respect to the mass of the target plant material by using the first mass of the second sample and the second mass of the second sample,

   ◦ comparing (260) the results of the analysis of the first sample with the results of the reference analysis of the second sample.

4. The method according to at least one of the preceding claims, wherein generating first calibration data further comprises one or several of the following steps:

   - converting (240a) the received electromagnetic waves into a spectral signal, in particular by using near-infrared spectroscopy (NIRS), and/or into at least one digital image, preferably several digital images, in particular RGB images and/or hyperspectral imaging, and/or

   - pre-processing (240b) the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or

   - pre-processing (240c) the at least one digital image using a filter, wherein preferably the filter is arranged for using at least one colour threshold to distinguish between target plant material and soil tare, and/or

   - removing spectral signals (240d) that are not converted from electromagnetic waves that are reflected from the first sample, preferably by differentiating the spectral signals using classification and/or filtering, in particular using mathematical filtering methods, and/or

   - averaging (240e) spectral signals to one spectral signal, and/or

   - carrying out (260) multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

5. The method according to at least one of the preceding claims, comprising

   - generating (211) second calibration data, comprising

    ◦ taking a sample (221) of the crop sample comprising target plant material adhered with soil tare, preferably a determined amount, for example 10kg,

    ◦ preferably chopping (231) the target plant material adhered with soil tare, and preferably moving the sample along a sensor that is adapted to receive electromagnetic waves,

    ◦ spectroscopic analysis (241) of the sample by, preferably continuously, emitting electromagnetic waves towards the sample, receiving electromagnetic waves, and converting the received electromagnetic waves into a spectral signal, in particular by using laser-induced breakdown spectroscopy (LIBS) and preferably at least one other analytical method,

    ◦ reference analysis (251) of the soil tare by conducting measurements, such as polarimetry, flame photometry, fluorometric o-5 phthalaldehyde (OPA) method, copper method, immobilized enzyme biosensor method, oven method, atomic absorption spectrometry (AAS), X-ray fluorescence spectroscopy (XRFS), inductively coupled plasma-atomic emission spectrometry (ICP-AES), and/or others,

    ◦ comparing (261) the results of the spectroscopic analysis with the results of the reference analysis,

   wherein preferably generating second calibration data further comprises one or several of the following steps:

    ◦ pre-processing (241a) the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or

◦ removing (241b) spectral signals that are not converted from electromagnetic waves that are reflected from the crop sample comprising target plant material adhered with soil tare, preferably by differentiating the spectral signals using classification and/or filtering, in particular using mathematical filtering methods, and/or

◦ averaging (241c) spectral signals to one spectral signal, and/or

◦ carrying out (261) multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

6. The method according to at least one of the preceding claims, comprising

- comparing data derived from processing the electromagnetic waves with the first calibration data and dependent on the comparison determine the percentage by mass of the target plant material and/or the percentage by mass of the soil tare, and/or
- processing the electromagnetic waves by spectroscopic analysis and comparing data derived therefrom with the second calibration data and dependent on the comparison determine components of the soil tare, and/or
- chopping (111) the crop sample comprising target plant material adhered with soil tare, and/or
- homogeneously distributing (112) the crop sample comprising target plant material adhered with soil tare onto the transport device, preferably with a roller that is arranged above the transport device, and/or
- moving (113) the crop sample comprising target plant material adhered with soil tare along a sensor that is adapted to receive electromagnetic waves and/or along a camera that is adapted to receive electromagnetic waves, wherein preferably moving the crop sample comprising target plant material adhered with soil tare is conducted using a transport device, preferably a conveyor belt, preferably with a transport velocity within a range of 0.05 m/s to 20 m/s, in particular 0.05 m/s to 10 10 m/s, preferably 0.5 m/s to 5 m/s.

7. The method according to at least one of the preceding claims, wherein

- processing the received electromagnetic waves comprises

◦ converting the received electromagnetic waves into a spectral signal, and/or
◦ converting the received electromagnetic waves into at least one digital image, preferably several digital images, in particular RGB images.

8. The method according to at least one of the preceding claims,

wherein emitting electromagnetic waves towards the crop sample comprising target plant material adhered with soil tare is conducted continuously and/or while the crop sample comprising target plant material adhered with soil tare are moving along the sensor and/or along the camera, and/or

wherein receiving electromagnetic waves reflected from the crop sample comprising target plant material adhered with soil tare is conducted continuously and/or while the crop sample comprising target plant material adhered with soil tare is moving along the sensor and/or along the camera, and/or

wherein the wavelength of the electromagnetic waves lies in the infrared spectrum, preferably in the near-infrared spectrum, and/or in the microwave region and/or in the visible spectrum, and/or in the ultraviolet spectrum, and/or

wherein the spectral signal is converted by using spectroscopy, in particular near-infrared spectroscopy (NIRS), mid-infrared-spectroscopy, far-infrared spectroscopy, terahertz-spectroscopy and/or ultraviolet-visible spectroscopy (UV-Vis) and/or Raman spectroscopy and/or laser-induced breakdown spectroscopy (LIBS), and/or fluorescence spectroscopy and/or hyperspectral imaging, and/or nuclear magnetic resonance and/or a combination of hyperspectral imaging with different spectroscopic approaches and/or combinations of different spectroscopic methods, and/or

wherein receiving electromagnetic waves is conducted using a camera and/or using a combination of a camera with one or several spectroscopy methods, in particular a combination of RGB camera with near-infrared spectroscopy and/or hyperspectral imaging.

9. The method according to at least one of the preceding claims, wherein
the method is performed as a continuous process, preferably

- by emitting electromagnetic waves and/or receiving electromagnetic waves and/or converting the received electromagnetic waves into a spectral signal in intervals of less than 100 ms, in particular of less than 50 ms, preferably in intervals of 10 ms, 20 ms, 30 ms or 40 ms, and/or
- by emitting electromagnetic waves and/or receiving electromagnetic waves and/or converting the received electromagnetic waves into a spectral signal repeatedly for at least 2 seconds, preferably at least 10 seconds, more preferably at least 20 seconds, more preferably at least 10 minutes, in particular at least 1 hour.

10. The method according to at least one of the preceding claims, wherein

the species of the target plant material is a root crop and/or a tuber crop, in particular Beta vulgaris and/or Solanum tuberosum, or at least a part thereof, and/or
wherein the target plant material comprises or consists of sugar beets.

11. The method according to at least one of the preceding claims, comprising

- processing the spectral signal for determining components in the soil tare, and/or
- comparing the spectral signal with the second calibration data and dependent on the comparison determine, preferably quantitatively, an amount and/or mass and/or mass fraction and/or volume fraction of components in the soil tare.

12. The method according to at least one of the preceding claims, wherein
the components in the soil tare comprise one or several of the following group:

- minerals, in particular potassium,
- sodium,
- magnesium,
- calcium,
- nitrogen,
- phosphorus,
- trace nutrients, for example iron and/or manganese,
- humus content,
- soil pH value,
- nitrogen containing compounds,
- organic matter,
- carbohydrates,
- starch,
- aromatics,
- fatty acids,
- leaves,
- root tips,
- topped beets,
- pieces of beets,
- weed,
- soil density,
- soil texture
- quality of at least one fertilizer,
- humification,
- soil fertility.

13. A method for generating first calibration data for analyzing a crop sample comprising a target plant material with soil tare adhered thereto, comprising

- taking (610) a sample of the crop sample comprising target plant material adhered with soil tare, comprising target plant material and soil tare, and dividing the sample into a first sample and a second sample,
- preferably chopping (620) the target plant material adhered with soil tare of the first sample, and/or preferably moving the first sample along a sensor that is adapted to receive electromagnetic waves and/or along a camera that is adapted to receive electromagnetic waves,
- analysis (630) of the first sample by, preferably continuously, emitting electromagnetic waves towards the first sample, receiving electromagnetic waves reflected from the first sample, and preferably processing the received electromagnetic waves,
- reference analysis (640) of the second sample by determining a first mass of the second sample, removing at least a part of the soil tare from the second sample and subsequently determining a second mass of the second sample, and calculating

   ◦ the percentage by mass of the soil tare with respect to the first mass of the second sample by using the first mass of the second sample and the second mass of the second sample, and/or
   ◦ the percentage by mass of the soil tare with respect to the mass of the target plant material by using the first mass of the second sample and the second mass of the second sample,

- comparing (650) the results of the analysis of the first sample with the results of the reference analysis of the second sample.

14. The method according to the preceding claim, comprising

   - converting (640a) the received electromagnetic waves into a spectral signal, and/or into at least one digital image, preferably several digital images, in particular RGB images, and/or
   - pre-processing (640b) the spectral signal for correcting and/or eliminating overlaying effects, wherein preferably pre-processing is conducted using multiplicative scatter correction (MSC), and/or first derivatives, and/or second derivatives, and/or smoothing, wherein preferably pre-processing is conducted before multiple and/or multivariate and/or linear regression analysis is carried out, and/or
   - pre-processing (640c) the at least one digital image using a filter, wherein preferably the filter is arranged for using at least one colour threshold to distinguish between target plant material and soil tare, and/or
   - removing (640d) spectral signals that are not converted from electromagnetic waves that are reflected from the first sample, preferably by differentiating the spectral signals using classification and/or filtering, in particular using mathematical filtering methods, and/or
   - averaging (640e) spectral signals to one spectral signal, and/or
   - carrying out (640f) multiple and/or multivariate and/or linear regression analysis for generating calibration data, wherein preferably the calibration data is derived using principle component analysis (PCA), and/or multiple linear regression (MLR), and/or partial least squares (PLS) regression, and/or machine learning, in particular using neuronal networks.

15. An analysis assembly for analyzing a crop sample comprising a target plant material with soil tare adhered thereto,

   wherein the analysis assembly is arranged to emit electromagnetic waves towards the crop sample comprising target plant material adhered with soil tare,
   wherein the analysis assembly is arranged to receive electromagnetic waves reflected from the crop sample comprising target plant material adhered with soil tare,
   wherein the analysis assembly is arranged to convert received reflected electromagnetic waves into a spectral signal and/or into digital images, preferably RGB images,
   wherein the analysis assembly is arranged to process the spectral signal and/or the digital images for determining the percentage by mass of the target plant material and/or the percentage by mass of the unwanted plant material and/or components in the unwanted plant material.

100

```
┌─────────────────────────────┐
│             110             │
└─────────────────────────────┘
              ↓
┌─────────────────────────────┐
│             120             │
└─────────────────────────────┘
              ↓
┌─────────────────────────────┐
│             130             │
└─────────────────────────────┘
              ↓
┌─────────────────────────────┐
│             140             │
└─────────────────────────────┘
        ↙       ↓       ↘
┌──────────┐ ┌──────────┐ ┌──────────┐
│   150a   │ │   150b   │ │   150c   │
└──────────┘ └──────────┘ └──────────┘
```

**Fig. 1**

100 →

| 210 |
|-----|
| 220 |
| 230 |
| 240 |
| 240a-240e |
| 250 |
| 260 |
| 110 |
| 111 |
| 112 |
| 113 |
| 120 |
| 130 |
| 140 |

| 150a |     | 150b |

**Fig. 2a**

100 →

| 211 |
|-----|
| 221 |
| 231 |
| 241 |
| 241a-241c |
| 251 |
| 261 |
| 110 |
| 111 |
| 112 |
| 113 |
| 120 |
| 130 |
| 140 |
| 150c |

**Fig. 2b**

**Fig. 3**

Fig. 4

Fig. 5

Fig. 6a

Fig. 6b

600

| 610 |
| --- |
| 620 |
| 630 |
| 640 |
| 640a-640e |
| 650 |

**Fig. 7**

# EP 4 163 620 A1

Europäisches
Patentamt

European
Patent Office

Office européen
des brevets

## EUROPEAN SEARCH REPORT

**Application Number**

EP 21 20 1107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/126399 A1 (WOLFF ANTJE [DE]) 23 May 2013 (2013-05-23) | 1,2, 6-12,15 | INV. G01N21/31 |
| Y | * figures 1, 4, 6, 7 * * paragraphs [0001] – [0008], [0035] – [0049], [0062] – [0075], [0084], [0085], [0088] – [0092] * * table 1 * | 3-5 | A01D33/08 A01D41/127 C13B5/06 |
| | ----- | | ADD. G01N21/85 |
| A | US 2010/216114 A1 (FRIEDHOFF FRANK [DE] ET AL) 26 August 2010 (2010-08-26) * figure 1 * * paragraph [0029] – paragraph [0036] * | 1,2, 6-12,15 | G01N21/84 G01N21/94 G01N21/359 G01N21/65 |
| | ----- | | G01N21/71 |
| A | WO 2019/185149 A1 (KWS SAAT SE & CO KGAA [DE]) 3 October 2019 (2019-10-03) * the whole document * | 1,2, 6-12,15 | |
| | ----- | | |
| X | WO 99/34193 A1 (OF SUGAR EXPERIMENT STATIONS B [AU]; SUGAR NORTH LIMITED [AU] ET AL.) 8 July 1999 (1999-07-08) | 13,14 | |
| Y | * page 3, line 6 – page 10, line 5 * * page 12, line 33 – page 14, line 4 * * tables 1, 2 * * figures 1, 2 * | 3-5 | **TECHNICAL FIELDS SEARCHED (IPC)** G01N A01F A01D |
| | ----- | | C13B |
| X | DE 10 2018 127846 A1 (GRIMME LANDMASCHINENFABRIK GMBH & CO KG [DE]) 7 May 2020 (2020-05-07) | 13,14 | |
| Y | * figures 1-7 * * the corresponding description * | 3-5 | |
| | ----- | | |
| | -/-- | | |

The present search report has been drawn up for all claims

| Place of search | Date of completion of the search | Examiner |
|---|---|---|
| Munich | 31 May 2022 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 20 1107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KO MEHMET TURUL ET AL: "Determination of soil loss by sugar beet harvesting", SOIL AND TILLAGE RESEARCH, ELSEVIER, AMSTERDAM, NL, vol. 123, 27 March 2012 (2012-03-27), pages 71-77, XP028505773, ISSN: 0167-1987, DOI: 10.1016/J.STILL.2012.03.012 [retrieved on 2012-04-05] * the whole document * | 3-5,13, 14 | |
| A | HIEN P: "Analyse von Verfahren zur Bestimmung der Qualität von Zuckerrüben, insbesondere des Erdanteils", ZUCKERINDUSTRIE – SUGAR INDUSTRY – INDUSTRIE SUCRIRE, BARTENS, BERLIN, DE , vol. 121, no. 4 10 April 1996 (1996-04-10), pages 244-249, XP009533652, ISSN: 0344-8657 Retrieved from the Internet: URL:https://sugarindustry.info/paper/10020895/ * the whole document * | 3-5,13, 14 | |

TECHNICAL FIELDS
SEARCHED      (IPC)

The present search report has been drawn up for all claims

| Place of search | Date of completion of the search | Examiner |
|---|---|---|
| Munich | 31 May 2022 | Sauerer, Christof |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

**EP 21 20 1107**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1, 2, 7-10, 12, 15(completely); 6, 11(partially)

   A method for analyzing a crop sample comprising a target plant material with soil tare adhered thereto, comprising
   – receiving a crop sample comprising target plant material adhered with soil tare,
   – emitting electromagnetic waves towards the crop sample comprising target plant material adhered with soil tare,
   – receiving electromagnetic waves reflected from the crop sample comprising target plant material adhered with soil tare,
   – processing the received electromagnetic waves using an analysis assembly,
   – determining a percentage by mass of the target plant material and/or a percentage by mass of the soil tare and/or components of the soil tare (, wherein
   – processing electromagnetic waves is conducted by using spectroscopy).
   ———

2. claims: 3-5, 13, 14(completely); 6, 11(partially)

   A method for generating first calibration data for analyzing a crop sample comprising a target plant material with soil tare adhered thereto, comprising
   – taking a sample of the crop sample comprising target plant material adhered with soil tare, comprising target plant material and soil tare, and dividing the sample into a first sample and a second sample,
   – preferably chopping the target plant material adhered with soil tare of the first sample, and/or preferably moving the first sample along a sensor that is adapted to receive electromagnetic waves and/or along a camera that is adapted to receive electromagnetic waves,
   – analysis of the first sample by, preferably continuously, emitting electromagnetic waves towards the first sample, receiving electromagnetic waves reflected from the first sample, and preferably processing the received electromagnetic waves,
   – reference analysis of the second sample by determining a first mass of the second sample, removing at least a part of the soil tare from the second sample and subsequently determining a second mass of the second sample, and calculating
   o the percentage by mass of the soil tare with respect to the first mass of the second sample by using the first mass of the second sample and the second mass of the second sample, and/or
   o the percentage by mass of the soil tare with respect to the mass of the target plant material by using the first mass of the second sample and the second mass of the second

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

```
sample,
- comparing the results of the analysis of the first sample
with the results of the reference analysis of the second
sample.
                        ---
```

## EP 4 163 620 A1

### ANNEX TO THE EUROPEAN SEARCH REPORT
### ON EUROPEAN PATENT APPLICATION NO.

EP 21 20 1107

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2022

| Patent document cited in search report | Publication date | Patent family member(s) | Publication date |
|---|---|---|---|
| US 2013126399 A1 | 23-05-2013 | CN 103037987 A | 10-04-2013 |
| | | DE 102010030908 A1 | 05-01-2012 |
| | | DK 2588255 T3 | 08-06-2015 |
| | | EP 2588255 A2 | 08-05-2013 |
| | | ES 2537264 T3 | 05-06-2015 |
| | | HR P20150542 T1 | 17-07-2015 |
| | | PL 2588255 T3 | 30-10-2015 |
| | | RU 2013102152 A | 10-08-2014 |
| | | UA 105705 C2 | 10-06-2014 |
| | | US 2013126399 A1 | 23-05-2013 |
| | | WO 2012001133 A2 | 05-01-2012 |
| US 2010216114 A1 | 26-08-2010 | DE 102009010438 B3 | 12-08-2010 |
| | | US 2010216114 A1 | 26-08-2010 |
| WO 2019185149 A1 | 03-10-2019 | CN 111936238 A | 13-11-2020 |
| | | EA 202092091 A1 | 29-01-2021 |
| | | JP 2021524799 A | 16-09-2021 |
| | | MA 51499 A1 | 31-12-2020 |
| | | WO 2019185149 A1 | 03-10-2019 |
| WO 9934193 A1 | 08-07-1999 | BR 9814406 A | 10-10-2000 |
| | | US 6630672 B1 | 07-10-2003 |
| | | WO 9934193 A1 | 08-07-1999 |
| | | ZA 9811783 B | 22-06-1999 |
| DE 102018127846 A1 | 07-05-2020 | BR 112021005312 A2 | 15-06-2021 |
| | | CA 3118799 A1 | 14-05-2020 |
| | | CN 112970032 A | 15-06-2021 |
| | | DE 102018127846 A1 | 07-05-2020 |
| | | EA 202191205 A1 | 28-09-2021 |
| | | EP 3877901 A1 | 15-09-2021 |
| | | JP 2022506699 A | 17-01-2022 |
| | | WO 2020094653 A1 | 14-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOSEN ASADI.** Beet-Sugar Handbook. John Wiley & Sons, 23 June 2006, 94-96